# EUROPEAN PATENT SPECIFICATION

(11) **EP 4 362 289 B1**
(45) Date of publication and mention of the grant of the patent: **29.04.2026**
(21) Application number: 22212085.9
(22) Date of filing: 07.12.2022
(51) Int. Cl.: H02K 5/20, H02K 9/06, F04D 29/70

(54) **FAN COVER AND CORRESPONDING ROTARY ELECTRIC MACHINE**
LÜFTERHAUBE UND ZUGEHÖRIGE ELEKTRISCHE DREHMASCHINE
CAPOT DE VENTILATEUR ET MACHINE ÉLECTRIQUE TOURNANTE CORRESPONDANTE

(30) Priority: 27.10.2022 BR 102022021954
(43) Date of publication of application: 01.05.2024
(73) Proprietor: Weg Equipamentos Elétricos S/A, 89256900 Jaragua do Sul (BR)
(72) Inventor: EYNG FRITZEN, Douglas, 89260388 Jaraguá do Sul (BR); DA SILVA, Gilson Rodrigo, 89257474 Jaraguá do Sul (BR); VERARDI, Marcelo, 89216110 Joinville (BR); JUNCKES, Ricardo Felipe, 89252500 Jaraguá do Sul (BR)
(74) Representative: Zacco Denmark A/S

(56) References cited:
- EP-A1- 2 424 080
- EP-B1- 3 073 619
- WO-A2-2009/039594
- CN-A- 112 648 209
- CN-U- 214 045 259
- JP-U- S5 461 204
- KR-B1- 101 812 734
- KR-B1- 101 941 201
- US-A1- 2012 206 022

## Description

### Field of application

The present invention relates to the field of rotary electric machines, in particular arrangements for air cooling or ventilation of rotary electric machines, notably self-ventilated rotary electric machines.

### Background of the Invention

Rotary electric machines are equipment used for transforming electric energy into mechanical energy, in the case of motors, and for transforming mechanical energy into electric energy, in the case of generators. They consist of essentially four basic structures, which are the housing, stator, rotor, and bearings/caps. In addition to these elements, depending on the different features of each rotary electric machine, there may also be auxiliary systems such as cooling or ventilation, in particular elements for self-ventilation of the rotary electric machine.

The housing is a static element responsible for integrating the structures of the rotary electric machine.

The stator is the static active (energized) component responsible for transmitting the magnetic flux for rotating the rotor, in the case of motors, and for transmitting the energy generated by the rotor, in the case of generators, while the rotor is the active (energized) component of the rotary electric machine.

The rotor, in turn, is basically composed of a shaft onto which one or more cages, coils, or permanent magnets are arranged, depending on the construction type and operating principle of the rotary electric machine.

The bearings, in turn, are the elements responsible for coupling the rotating parts to the static parts of a rotary electric machine, providing, for example, coupling, support, and centering of the (rotating) rotor in relation to the (static) stator, allowing for relative movement between rotor and stator, as well as the transmission of forces between them.

On the other hand, systems dedicated to the air cooling of the electric machine, in particular the self-ventilated ones that are coupled to rotating elements of the electric machine, have one or more fans that capture air at room temperature from the external surroundings of the electric machine and, together with deflector devices, they force this air through the electric machine, promoting thermal exchange and removing part of the heat generated during operation.

In addition to the normal heating of a rotary electric machine, some applications subject the machines to additional stress that generates even more heat and, in either situation, an efficient heat exchange is essential. Thus, rotary electric machines demand highly efficient cooling solutions to withstand the heating resulting from their operation.

Given that rotary electric machines operate under the most different rotating conditions, mechanical loads and temperatures, and that the heat exchange in air-cooled electric machines increases according to the temperature differential and the volume of moving air, cooling challenges and imposes limits on electric motor manufacturers around the world that go beyond size and power limitations.

The restrictions also include the degree of protection and noise attenuation, since insulating against impurities, bad weather and noise go directly against the heat exchange between the electric machine and its surroundings, demanding a relationship between the variables that not always fully satisfies design requirements. In addition, the elements of the self-ventilated assembly need to be enclosed for safety reasons and be easily accessible for cleaning, maintenance or repairs, in addition to supporting the operating conditions of the rotary electric machine.

Another need is the construction of increasingly structurally resistant fan covers, while at the same time reducing mass, which also results in the need to optimize the geometry of the fan covers to save material and also improve air flow, while also meeting the safety standards stipulated for this type of product.

The challenge lies, therefore, in designing robust and lightweight air fan covers that promote thermal exchange by directing the air moved by the fans towards the housing, encapsulating the fans to avoid accidents and that can be easily assembled and dismantled, preferably without the use of additional tools or devices, and which, once assembled, are geometrically and positionally stable. The fan covers must also be able to withstand the most varied handling (factory assembly, packaging, transport) and electric machine operation (vibration, torque, temperature variations, accidental physical contact, among others) conditions, while at the same time being of simple construction and manufacture, with optimization of both the use of raw materials and the manufacture and assembly process.

### State of the Art

In the prior art there are several solutions for caps and deflector devices for self-ventilated rotary electric machines.

An example is patent document CN 109120089 A, which discloses and describes an electric motor housing comprising external heat-dissipating plates; heat dissipation holes and water channels; dust screens and internal heat dissipation plates; a heat dissipation fan cover; a rear cover plate; and a rear cover dust screen, wherein one side of the rear cover plate is away from the heat dissipation fan cover.

The solution described in CN 109120089 A comprises a deflector with a hemispherical shape next to the fan. It should be noted that such a deflector does not have an optimized construction geometry, since it does not have an efficient air exchange interface, in addition to having low resistance and a shape that is not economical from a raw material point of view.

Despite the presented solution having heat dissipation holes and water channels to counterbalance its problem of low capacity to exchange heat with the environment, this measure only exchanges one problem for another, as it entails greater complexity and increases the manufacturing costs of these parts.

WO2009/039594 discloses a fan cover for a rotating electric machine, particularly designed to reduce the level of noise generated by the rotating electric machine and to improve the cooling performance of the rotating electric machine, said fan cover having a front end having a first diameter and a back end having a second diameter bigger than said first diameter, said front and back ends being connected to each other through a structural side wall having an inner surface defined by, from said front end to said back end, a first convex side wall portion having a first curvature and a second concave side wall portion having a second curvature.

CN112648209 discloses a fan, a mesh enclosure assembly and a front mesh enclosure. The fan comprises fan blades and a mesh enclosure assembly, the mesh enclosure assembly comprises a front mesh enclosure and a rear mesh enclosure, and the front mesh enclosure comprises a first enclosure body and a second enclosure body. The rear mesh enclosure is connected with the front mesh enclosure, and the fan blades are arranged in a containing space defined by the front mesh enclosure and the rear mesh enclosure. Due to the fact that the second enclosure body of the front mesh enclosure is arranged on the peripheral side of the first enclosure body in a sleeving mode, and the outer windward side of the second enclosure body is obliquely arranged in the air outlet direction of the fan blades in the direction away from the first enclosure body. By means of the wall attachment effect of air in the blowing-out process, the air blown out from the outer windward side through the second enclosure body can be further diffused outwards, then the air supply range can be enlarged, and the air supply volume is guaranteed.

US2012/206022 discloses an electro-dynamic machine including a rotor shaft extending along an axis and a bearing rotatably supporting the rotor shaft for rotation about the axis. An inner housing has an outer surface and defines a bearing bore. The bearing bore receives and supports the bearing. An outer housing surrounds the inner housing. A plurality of non-radial ribs extends from the outer housing to the inner housing. The non-radial ribs are coupled to the inner housing substantially tangential to the outer surface.

EP2424080 discloses a driving motor meeting the requests of making the length of a rotating axis of the driving motor to be shorter in the axial direction, and which will also have waterproof, vibration resistance, and soundproof characteristics. In this driving motor, a motor interior-space is formed by a housing that has a first and second opening and which is formed to be cylinder shaped, and a flange that blocks the second opening of this housing, and a stator assembly, a rotor assembly, a lower-side end section of the rotating axis that has been placed lower than the flange up until now, and a control circuit-board are all made to be contained in this motor interior-space. Furthermore, a ring-shaped elastic member is made to interpose between the upper-side end section of the rotating axis and the first opening of the housing; and the lower-side end section of the rotating axis, the stator assembly, and the rotor assembly are made to be fixed to the flange through a mounting elastic member.

As can be inferred from the above description, there is room and demand for a fan cover solution for self-ventilated rotary electric machines that overcomes the disadvantages of the state of the art, in particular robust and lightweight fan covers that can be easily and quickly assembled and disassembled without the use of tools or devices and that, after assembled, are geometrically and positionally stable.

### Objects of the Invention

Therefore, one of the objects of the present invention is to provide a fan cover for rotary electric machines according to the features of claim 1 of the appended set of claims.

Another object of the present invention is to provide a rotary electric machine provided with an air fan cover, according to the features of claim 11 of the appended set of claims.

Additional features and feature details are evident from the dependent claims.

### Brief description of the figures

For a better understanding and visualization of the object, the present invention will now be described with reference to the appended figures, representing the obtained technical effect by means of an exemplary embodiment not limiting the scope of the present invention, wherein, schematically:

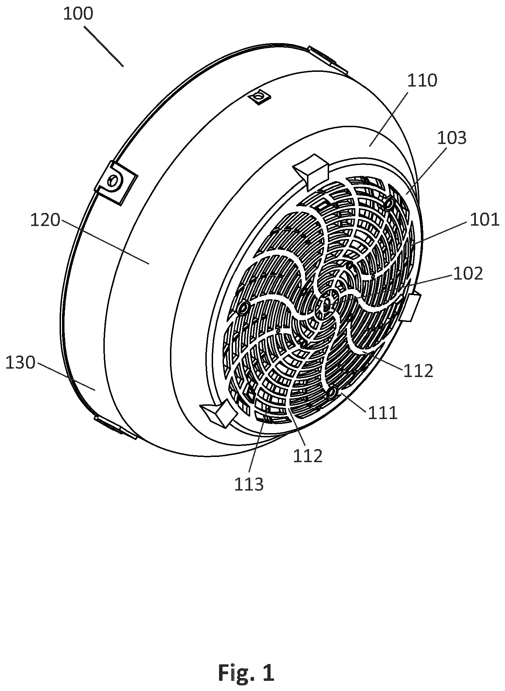

- Figure 1:: shows a perspective view of a fan cover according to the invention;

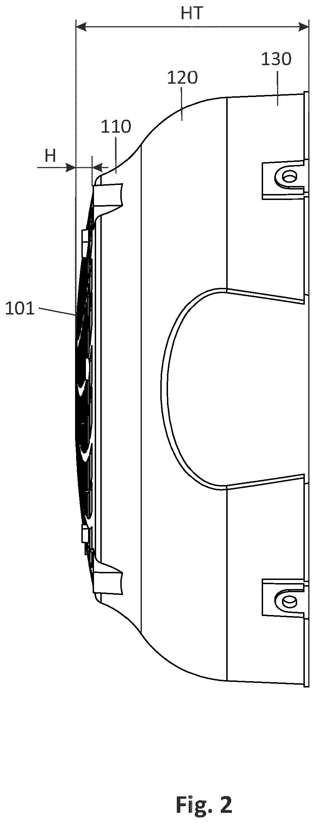

- Figure 2:: shows a side view of the fan cover of Figure 1;

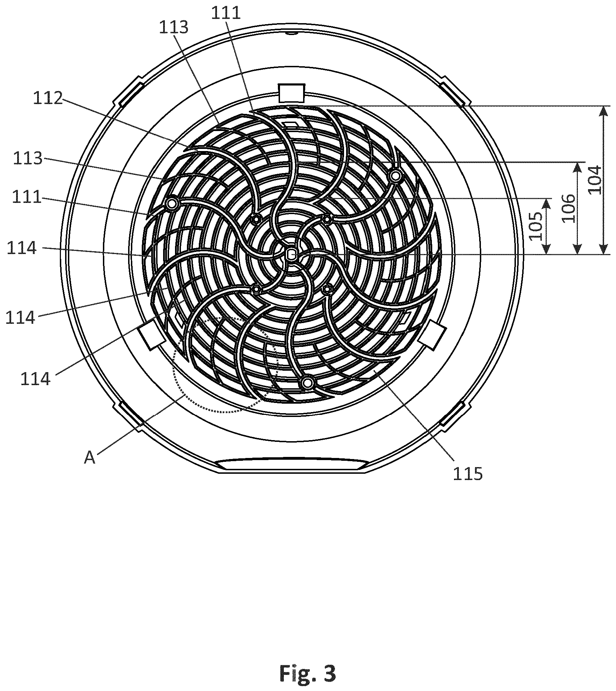

- Figure 3:: shows a rear view of the fan cover of Figure 1;

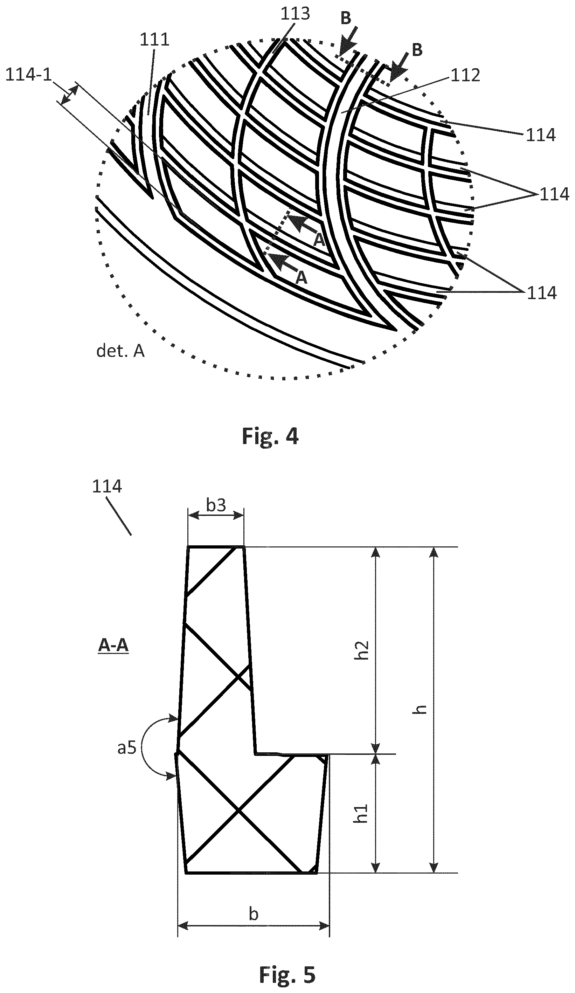

- Figure 4:: shows detail A of Figure 3;
- Figure 5:: shows section A-A of a radial rib according to the invention shown in Figure 4;

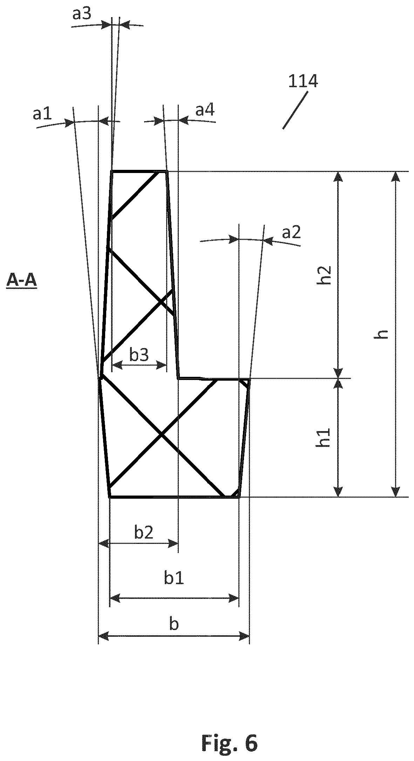

- Figure 6:: shows section A-A of Figure 5, showing the details of the radial rib;

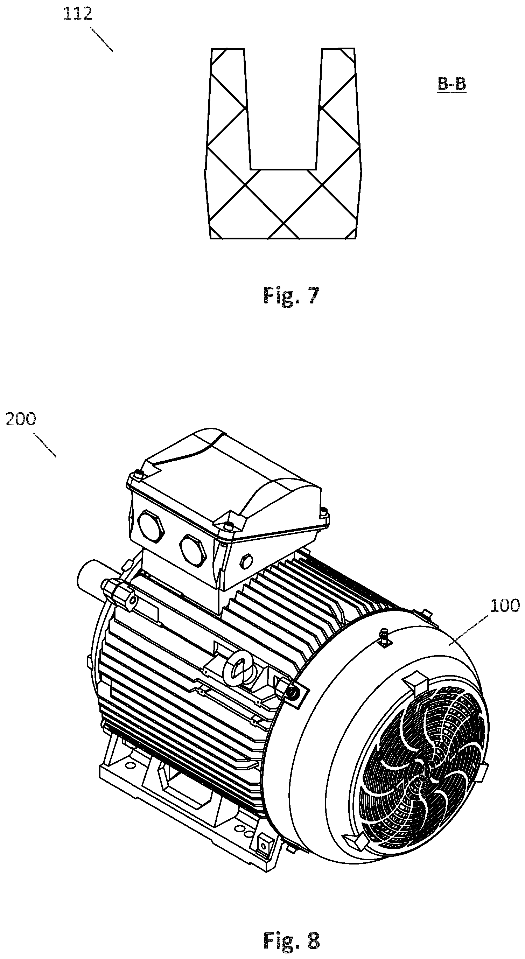

- Figure 7:: shows section B-B of a second rib according to the invention shown in Figure 4; and
- Figure 8:: shows a perspective view of a rotary electric machine according to the invention.

### Detailed Description of the Invention

The present invention relates to a deflector device or fan cover (100) for application in cooling or ventilation systems of self-ventilated rotary electric machines (200), in which the fan cover (100) caps one or more fans of the self-ventilated system, channels and directs the air moved by the fan(s).

The fan cover (100) of the invention comprises a suction region (110), a guiding region (120) and a coupling and exhaust region (130) axially adjacent to each other, wherein the fan cover (100) is mounted on one or more fixed parts of the rotary electric machine (200), while the guiding region (120) is adjacent to the suction region (110) and comprises the intermediate part of the fan cover (100), which serves to direct the captured air over and towards the outer surface of the rotary electric machine (200). The coupling and exhaust region (130) is adjacent to the guiding region (120) comprising both the coupling elements for mounting the fan cover (100) on shoulders, for example, of the rear cap, and the moving air outlet, being opposite to and downstream of the suction region (110).

The suction region (110) is located at one of the ends of the fan cover (100) comprising a grid or grille (101) comprising a central region (102) and a perimeter region (103) between which at least one first rib (111) and/or at least one second rib (112) and/or at least one third rib (113) and at least one radial rib (114) is(are) arranged, wherein at least one radial rib (114) connects to at least one of the first and/or second and/or third ribs (111, 112, 113), forming the openings (115) of the grid (101) that allow the passage/capture of air from outside of the rotary electric machine (200).

The first rib (111) is preferably a curved rib with a preferably U-shaped cross-section, which forms the basis of the grid structure (101), extending from the perimeter region (103) to the central region (102), integrally covering a radial distance corresponding to the total radius (104) of the grid (101). It should be noted that the cross-section of the first rib (111) can also have an L or U shape with edges of different lengths.

The second rib (112) is preferably a curved rib with a preferably U-shaped cross-section, which promotes the additional structuring of the grid (101), extending from the perimeter region (103) towards the central region (102) and ending in a radial rib (114) located at a radial distance (105) corresponding to a value between 10% and 60%, preferably between 30% and 55% of the total radius (104). It should be noted that the cross-section of the second rib (112) can also have an L or U shape with edges of different lengths.

In addition, the second ribs (112) can also be massively formed, however, the "L" and "U" shapes, in addition to presenting greater material savings, also allow a more homogeneous distribution of thicknesses along the part, and, thus, a more uniform cooling that does not differ from the cooling of the other portions of the part, avoiding shrinkage and warping. This condition also applies to the other ribs (111, 113, 114).

In an alternative embodiment of the present invention, at least one first rib (111) and at least one second rib (112) radially adjacent to each other are arranged at regular intervals. It is noted that the definition of their arrangement radially adjacent to each other at regular intervals comprises the grouping of one or more first ribs (111) interleaved with one or more second ribs (112). It should be noted that smaller diameter fan covers (100) may require a less complex structure and, thus, comprise only first ribs (111), without necessarily including second ribs (112).

The third rib (113) is preferably a curved rib with a preferably polygonal cross-section, which promotes the additional structuring of the grid (101), extending from the perimeter region (103) towards the central region (102) and ending in a radial rib (114) located at a radial distance (106) corresponding to a value between 55% and 75%, preferably between 50% and 70% of the total radius (104). In addition, the cross-sections of the third ribs (113) can also have an L or U shape with edges of equal or different lengths to each other. It should also be noted that smaller diameter fan covers (100) may require a less complex structure and, thus, comprise only first ribs (111) and second ribs (112), without necessarily including third ribs (113).

In a preferred embodiment of the present invention, a plurality of third ribs (113) is arranged between a plurality of first ribs (111) and a plurality of second ribs (112). It should be noted that this condition also comprises the grouping of one or more third ribs (113) between one or more first ribs (111) and/or one or more second ribs (112).

The radial rib (114) is preferably an annular rib with a preferably L-shaped cross-section, which promotes the additional structuring of the grid (101), forming adjacent, preferably concentric circles separated from each other by the radial distance (114-1), with diameters that decrease from the perimeter region (103) towards the central region (102), wherein at least one radial rib (114) connects to at least one of the first, second and/or third ribs (111, 112, 113), forming the openings (115) of the grid (101) that allow the passage/capture of air from outside of the rotary electric machine (200). It should be noted that the cross-section of the radial rib (114) can also have a U shape with edges of equal and/or different lengths. It should also be noted that the distances between the radial ribs (114) can be equal or different from each other, as long as the minimum safety distance required by the standard is met.

The L-shaped cross-section of the radial rib (114) has a total height (h) and total width (b) comprising a polygonal, preferably trapezoidal base, having a base height (h1) and base width (b1), with side walls forming angles (a1) and (a2) with the vertical plane, and a polygonal, preferably trapezoidal rod, having a rod height (h2) and total rod width (b2) and rod end width (b3), with side walls forming angles (a3) and (a4) with the vertical plane.

The total height (h) corresponds to a value between 1.5 and 3.0, preferably between 1.8 and 2.6 times the total width (b) value, wherein the base height (h1) represents a value between 20% and 50%, preferably between 30% and 40% of the total height (h) value, while the rod height (h2) represents a value between 50% and 80%, preferably between 60% and 70% of the total height (h) value.

The base height (h1) corresponds to a value between 0.7 and 2.1, preferably between 0.7 and 1.5 times the base width (b1) value.

The rod height (h2) corresponds to a value between 1.8 and 3.5, preferably between 2.1 and 3 times the value of the total rod width (b2) and to a value between 2.8 and 5, preferably between 3.2 and 4.2 times the rod end width (b3) value.

Thus, the cross-sectional area of the polygonal base of the radial rib (114) corresponds to a value between 30% and 50%, preferably between 40% and 50% of the total cross-sectional area of the radial rib (114), while the area of the cross-section of the polygonal rod of the radial rib (114) corresponds to a value between 50% and 70%, preferably between 50% and 60% of the total cross-sectional area of the radial rib (114).

Angles (a1) and (a2) vary between 0° and 15°, preferably between 4° and 8°, and may be the same or different from each other, while angles (a3) and (a4) vary between 0° and 10°, preferably between 1° and 5°, and may also be the same or different from each other.

In case angles (a1) and (a2) are equal to 0°, the measure of the base width (b1) will correspond to the measure of the total width (b), while in case angles (a3) and (a4) are equal to 0°, the measure of the rod end width (b3) will correspond to the measure of the total rod width (b2).

The faces of the polygonal base and the polygonal rod of the radial rib (114) facing away from the grid (101) form an angle (a5) between each other that varies between 180° and 205°, preferably between 185° and 193°.

In this way, the radial rib (114) is able to provide a better ratio of strength/stiffness per weight of material, when compared to a solid profile in the state of the art, which results in greater savings in both manufacturing costs and manufacturing time, in addition to providing greater homogeneity in the thickness of the radial ribs (114) during the injection process in the part's manufacture.

The amount of first, second and third ribs, and radial ribs (111, 112, 113, 114) can be increased or decreased, depending on the need for greater rigidity or greater air passage of the fan cover (100).

It should be noted that the size and spacing relationship between the first ribs (111), the second ribs (112), the third ribs (113), and the fourth ribs (114) must be such so as to restrict the entry of objects and/or fingers, in order to adapt the fan cover (100) to the safety standards currently in force, such as IEC60509.

In addition, the first, second and third ribs, and radial ribs (111, 112, 113, 114), in addition to providing structural reinforcement to the fan cover (100), allowing other structures comprised by it, such as the suction region (110) and the grid (101), to have greater spacing and/or a reduction in mass, without compromising the integrity of the part, also contribute to the attenuation of noise from the rotary electric machine (200).

The suction region (110) may additionally comprise a bulge with a height (H), which varies between 3 and 15% of the total width (HT) of the fan cover (100).

The bulge contributes to the distribution of forces in case of impact of the fan cover (100), in addition to preventing the formation and propagation of cracks in the fan cover (100) and moving the grid (101) away from the suction region (110) of the fan blades of the rotary electric machine (200).

The deflector material must be a flexible and resilient material that is robust and resistant to temperature variations and extreme temperatures, being preferably chosen, without limitation, from the group of thermoplastics, and can be only one material or a combination of one or more different thermoplastics.

Thus, it is evident that the fan cover (100) of the invention overcomes the disadvantages of the relevant state of the art, providing a robust and light-weight fan cover, with a mass reduction of up to 12% of the total mass of the fan cover (100) part, having optimized geometry, lower manufacturing costs, and optimized airflow distribution.

Finally, a rotary electric machine (200) according to the invention is an electric motor provided with at least one fan cover (100), wherein the one or more fans of the self-ventilated system of the rotary electric machine (200) is/are capped by the fan cover (100) according to the invention.

### Conclusion

As will be easily understood by one skilled in the art, modifications to the present invention can be made without departing from the concepts disclosed in the description above. Such modifications should be considered as comprised in the scope of the present invention. Consequently, the particular embodiments previously described in detail are illustrative and exemplary only and are non-restrictive as to the scope of the present invention, which should be given the full extent of the appended claims and any and all equivalents thereof.

## Claims

1. A fan cover (100), comprising an inlet region (110) with a grid (101) comprising a central region (102) and a perimeter region (103), wherein at least one first rib (111) and/or at least one second rib (112) and/or at least one third rib (113) and at least one radial rib (114) are arranged between these regions (102, 103), **characterized in that** the radial rib (114) is preferably an annular rib with an L-shaped cross-section, and which connects to at least one of the first and/or second and/or third ribs (111, 112, 113), wherein the L-shaped cross-section of the radial rib (114) has a total height (h) and a total width (b) comprising a polygonal, preferably trapezoidal base with a base height (h1) and a base width (b1) with side walls forming a plurality of angles (a1, a2) with the vertical plane, and a polygonal, preferably trapezoidal rod with a rod height (h2) and a total rod width (b2) and a rod end width (b3), with side walls forming a plurality of angles (a3, a4) with the vertical plane.

2. The fan cover (100) according to claim 1, **characterized in that** the radial ribs (114) form adjacent, preferably concentric circles separated from each other by a radial distance (114-1), with diameters that decrease from the perimeter region (103) towards the central region (102).

3. The fan cover (100) according to claim 1 or 2, **characterized in that** the total height (h) corresponds to a value between 1.5 and 3.0, preferably between 1.8 and 2.6 times the total width (b) value, wherein the base height (h1) represents a value between 20% and 50%, preferably between 30% and 40% of the total height (h) value, while the rod height (h2) represents a value between 50% and 80%, preferably between 60% and 70% of the total height (h) value.

4. The fan cover (100) according to any one of claims 1 - 3, **characterized in that** the base height (h1) corresponds to a value between 0.7 and 2.1, preferably between 0.7 and 1.5 times the base width (b1) value.

5. The fan cover (100) according to claim 1, **characterized in that** the rod height (h2) corresponds to a value between 1.8 and 3.5, preferably between 2.1 and 3 times the value of the total rod width (b2) and to a value between 2.8 and 5, preferably between 3.2 and 4.2 times the rod end width (b3) value.

6. The fan cover (100) according to claim 1, **characterized in that** the cross-sectional area of the polygonal base of the radial rib (114) corresponds to a value between 30% and 50%, preferably between 40% and 50% of the total cross-sectional area of the radial rib (114), while the sectional area of the polygonal rod of the radial rib (114) corresponds to a value between 50% and 70%, preferably between 50% and 60% of the total cross-sectional area of the radial rib (114).

7. The fan cover (100) according to claim 1, **characterized in that** the angles (a1, a2) vary between 0° and 15°, preferably between 4° and 8°, and may be the same or different from each other, while the angles (a3, a4) vary between 0° and 10°, preferably between 1° and 5°, and may be the same or different from each other.

8. The fan cover (100) according to claim 1, **characterized in that** the faces of the polygonal base and polygonal rod of the radial rib (114) facing away from the grid (101) form an angle (a5) between each other that varies between 180° and 205°, preferably between 185° and 193°.

9. The fan cover (100) according to claim 1, **characterized in that** the suction region (110) may additionally comprise a bulge with a height (H), which varies between 3 and 15% of the total width of the fan cover (100).

10. A rotary electric machine (200), **characterized in that** the one or more fans of the self-ventilated system of the rotary electric machine (200) is covered with a fan cover (100) as defined in any one of claims 1 to 9.

## Patentansprüche

1. Lüfterabdeckung (100) mit einem Einlassbereich (110) und einem Gitter (101), das einen Mittelbereich (102) und einen Umfangsbereich (103) aufweist, wobei zwischen diesen Bereichen (102, 103) mindestens eine erste Rippe (111) und/oder mindestens eine zweite Rippe (112) und/oder mindestens eine dritte Rippe (113) sowie mindestens eine radiale Rippe (114) angeordnet sind, **dadurch gekennzeichnet, dass** die radiale Rippe (114) vorzugsweise eine ringförmige Rippe mit einem L-förmigen Querschnitt ist, die mit mindestens einer der ersten und/oder zweiten und/oder dritten Rippen (111, 112, 113) verbunden ist, wobei der L-förmige Querschnitt der radialen Rippe (114) eine Gesamthöhe (h) und eine Gesamtbreite (b) aufweist, die eine polygonale, vorzugsweise trapezförmige Grundfläche mit einer Grundflächenhöhe (h1) und einer Grundflächenbreite (b1) umfasst, wobei die Seitenwände mehrere Winkel (a1, a2) mit der Vertikalebene bilden, sowie einen polygonalen, vorzugsweise trapezförmigen Stab mit einer Stabhöhe (h2), einer Gesamtstabbreite (b2) und einer Stabendbreite (b3), wobei die Seitenwände mehrere Winkel (a3, a4) mit der Vertikalebene bilden.

2. Lüfterabdeckung (100) nach Anspruch 1, **dadurch gekennzeichnet, dass** die radialen Rippen (114) aneinandergrenzende, vorzugsweise konzentrische Kreise bilden, die durch einen radialen Abstand (114-1) voneinander getrennt sind und deren Durchmesser vom Umfangsbereich (103) zum Mittelbereich (102) hin abnehmen.

3. Lüfterabdeckung (100) nach Anspruch 1 oder 2, **dadurch gekennzeichnet, dass** die Gesamthöhe (h) einem Wert zwischen dem 1,5- und 3,0-Fachen, vorzugsweise zwischen dem 1,8- und 2,6-Fachen der Gesamtbreite (b) entspricht, wobei die Grundflächenhöhe (h1) einen Wert zwischen 20 % und 50 %, vorzugsweise zwischen 30 % und 40 % der Gesamthöhe (h) ausmacht, während die Stabhöhe (h2) einen Wert zwischen 50 % und 80 %, vorzugsweise zwischen 60 % und 70 % der Gesamthöhe (h) ausmacht.

4. Lüfterabdeckung (100) nach einem der Ansprüche 1 bis 3, **dadurch gekennzeichnet, dass** die Grundflächenhöhe (h1) einem Wert zwischen dem 0,7- und 2,1-Fachen, vorzugsweise zwischen dem 0,7- und 1,5-Fachen der Grundflächenbreite (b1) entspricht.

5. Lüfterabdeckung (100) nach Anspruch 1, **dadurch gekennzeichnet, dass** die Stabhöhe (h2) einem Wert zwischen dem 1,8- und 3,5-Fachen, vorzugsweise zwischen dem 2,1- und 3-Fachen der Gesamtstabbreite (b2) sowie einem Wert zwischen dem 2,8- und 5-Fachen, vorzugsweise zwischen dem 3,2- und 4,2-Fachen der Stabenendbreite (b3) entspricht.

6. Lüfterabdeckung (100) nach Anspruch 1, **dadurch gekennzeichnet, dass** die Querschnittsfläche der polygonalen Grundfläche der radialen Rippe (114) einem Wert zwischen 30 % und 50 %, vorzugsweise zwischen 40 % und 50 % der gesamten Querschnittsfläche der radialen Rippe (114) entspricht, während die Querschnittsfläche des polygonalen Stabes der radialen Rippe (114) einem Wert zwischen 50 % und 70 %, vorzugsweise zwischen 50 % und 60 % der gesamten Querschnittsfläche der radialen Rippe (114) entspricht.

7. Lüfterabdeckung (100) nach Anspruch 1, **dadurch gekennzeichnet, dass** die Winkel (a1, a2) zwischen 0° und 15°, vorzugsweise zwischen 4° und 8°, variieren und gleich oder verschieden sein können, während die Winkel (a3, a4) zwischen 0° und 10°, vorzugsweise zwischen 1° und 5°, variieren und gleich oder verschieden sein können.

8. Lüfterabdeckung (100) nach Anspruch 1, **dadurch gekennzeichnet, dass** die von dem Gitter (101) abgewandten Flächen der polygonalen Gründfläche und des polygonalen Stabs der radialen Rippe (114) einen Winkel (a5) bilden, der zwischen 180° und 205°, vorzugsweise zwischen 185° und 193°, variiert.

9. Lüfterabdeckung (100) nach Anspruch 1, **dadurch gekennzeichnet, dass** der Einlassbereich (110) zusätzlich eine Ausbuchtung mit einer Höhe (H) aufweisen kann, die zwischen 3 % und 15 % der Gesamtbreite der Lüfterabdeckung (100) variiert.

10. Rotierende elektrische Maschine (200), **dadurch gekennzeichnet, dass** der oder die Lüfter des selbstbelüfteten Systems der rotierenden elektrischen Maschine (200) mit einer Lüfterabdeckung (100) gemäß einem der Ansprüche 1 bis 9 bedeckt sind.

## Revendications

1. Un couvercle de ventilateur (100) comprenant une région d'entrée (110) avec une grille (101) comprenant une région centrale (102) et une région périphérique (103), dans lequel au moins une première nervure (111) et/ou au moins une deuxième nervure (112) et/ou au moins une troisième nervure (113) et au moins une nervure radiale (114) sont disposées entre ces régions (102, 103), **caractérisé en ce que** la nervure radiale (114) est de préférence une nervure annulaire de section transversale en L, et qui se raccorde à au moins l'une des première et/ou deuxième et/ou troisième nervures (111, 112, 113), dans laquelle la section transversale en L de la nervure radiale (114) a une hauteur totale (h) et une largeur totale (b) comprenant une base polygonale, de préférence trapézoïdale avec une hauteur de base (h1) et une largeur de base (b1) avec des parois latérales formant une pluralité d'angles (a1, a2) avec le plan vertical, et une tige polygonale, de préférence trapézoïdale avec une hauteur de tige (h2) et une largeur totale de tige (b2) et une largeur d'extrémité de tige (b3), avec des parois latérales formant une pluralité d'angles (a3, a4) avec le plan vertical.

2. Le couvercle de ventilateur (100) selon la revendication 1, **caractérisé en ce que** les nervures radiales (114) forment des cercles adjacents, de préférence concentriques, séparés les uns des autres par une distance radiale (114-1), avec des diamètres qui diminuent de la région périphérique (103) vers la région centrale (102).

3. Le couvercle de ventilateur (100) selon la revendication 1 ou 2, **caractérisé en ce que** la hauteur totale (h) correspond à une valeur comprise entre 1,5 et 3,0, de préférence entre 1,8 et 2,6 fois la valeur de la largeur totale (b), dans laquelle la hauteur de base (h1) représente une valeur comprise entre 20 % et 50 %, de préférence entre 30 % et 40 % de la valeur de la hauteur totale (h), tandis que la hauteur de la tige (h2) représente une valeur comprise entre 50 % et 80 %, de préférence entre 60 % et 70 % de la valeur de la hauteur totale (h).

4. Le couvercle de ventilateur (100) selon l'une quelconque des revendications 1 à 3, **caractérisé en ce que** la hauteur de base (h1) correspond à une valeur comprise entre 0,7 et 2,1, de préférence entre 0,7 et 1,5 fois la valeur de largeur de base (b1).

5. Le couvercle de ventilateur (100) selon la revendication 1, **caractérisé en ce que** la hauteur de la tige (h2) correspond à une valeur comprise entre 1,8 et 3,5, de préférence entre 2,1 et 3 fois la valeur de la largeur totale de la tige (b2) et à une valeur comprise entre 2,8 et 5, de préférence entre 3,2 et 4,2 fois la valeur de la largeur de l'extrémité de la tige (b3).

6. Le couvercle de ventilateur (100) selon la revendication 1, **caractérisé en ce que** la surface de section transversale de la base polygonale de la nervure radiale (114) correspond à une valeur comprise entre 30 % et 50 %, de préférence entre 40 % et 50 % de la surface de section transversale totale de la nervure radiale (114), tandis que la surface de section de la tige polygonale de la nervure radiale (114) correspond à une valeur comprise entre 50 % et 70 %, de préférence entre 50 % et 60 % de la surface de section transversale totale de la nervure radiale (114).

7. Le couvercle de ventilateur (100) selon la revendication 1, **caractérisé en ce que** les angles (a1, a2) varient entre 0° et 15°, de préférence entre 4° et 8°, et peuvent être identiques ou différents l'un de l'autre, tandis que les angles (a3, a4) varient entre 0° et 10°, de préférence entre 1° et 5°, et peuvent être identiques ou différents l'un de l'autre.

8. Le couvercle de ventilateur (100) selon la revendication 1, **caractérisé en ce que** les faces de la base polygonale et de la tige polygonale de la nervure radiale (114) faisant face à la grille (101) forment un angle (a5) entre elles qui varie entre 180° et 205°, de préférence entre 185° et 193°.

9. Le couvercle de ventilateur (100) selon la revendication 1, **caractérisé en ce que** la région d'aspiration (110) peut en outre comprendre un renflement présentant une hauteur (H) qui varie entre 3 et 15 % de la largeur totale du couvercle de ventilateur (100).

10. Une machine électrique rotative (200), **caractérisée en ce que** le ou les ventilateurs du système autoventilé de la machine électrique rotative (200) sont recouverts d'un couvercle de ventilateur (100) tel que défini dans l'une quelconque des revendications 1 à 9.
